# EUROPÄISCHE PATENTSCHRIFT

(11) **EP 0 522 409 B1**
(45) Veröffentlichungstag und Bekanntmachung des Hinweises auf die Patenterteilung: **31.08.1994**
(21) Anmeldenummer: 92111000.3
(22) Anmeldetag: 29.06.1992
(51) Int. Cl.: B60R 1/08, G02B 1/10, G02B 5/08

(54) **Rückblickspiegel für Kraftfahrzeuge**
Rear-view mirror for motor vehicles
Rétroviseur pour véhicules automobiles

(30) Priorität: 08.07.1991 DE 4122555
(43) Veröffentlichungstag der Anmeldung: 13.01.1993
(73) Patentinhaber: Bayerische Motoren Werke Aktiengesellschaft, 80788 München (DE); Fa. HELMUT PIRINGER SONDERENTWICKLUNGEN F. KUNSTSTOFFINDUSTRIE UND FEINWERKTECHNIK, 85598 Baldham (DE)
(72) Erfinder: Altmann, Otto, W-8011 Kirchseeon (DE); Berrendorf, Hans-Jürgen, W-8000 München 90 (DE); Piringer, Helmut, W-8011 Baldham (DE)

(56) Entgegenhaltungen:
- DE-A- 3 512 494
- DE-C- 3 436 011
- DE-C- 3 941 859
- FR-A- 2 169 072
- US-A- 2 519 546

## Beschreibung

Die Erfindung betrifft einen Rückblickspiegel für Kraftfahrzeuge, mit den im Oberbegriff des Patentanspruches 1 angegebenen Merkmalen.

Ein derartiger Rückblickspiegel für Kraftfahrzeuge ist in der DE-C-3436 011 beschrieben, der einen transparenten Schichtträger und auf dessen Rückseite eine Spiegelschicht aus einem Metall oder einer Metallegierung aufweist. Zwischen der Spiegelschicht und dem Schichtträger ist eine Interferenzschicht aus dielektrischem Material vorgesehen, die in ihrer Dicke als Entspiegelungsschicht für den langwelligen sichtbaren Spektralbereich ausgebildet ist. Außerdem ist zwischen dem Schichtträger und der Interferenzschicht noch eine Zusatzschicht aus einem Metall oder einer Metallegierung solcher Dicke vorgesehen, daß die Lichtdurchlässigkeit des aus dem transparenten Schichtträger und der Zusatzschicht bestehenden Verbundes um 10 bis 55 % niedriger ist als von dem Schichtträger allein. Auf der dem Spiegelbetrachter abgewandten Rückseite des Rückblickspiegels kann ein Schutzlack aufgebracht sein.

Ein wesentlicher Nachteil ist, daß die Interferenzschicht in ihrer Dicke genau einzuhalten ist und der Schichtträger in jedem Fall transparent auszubilden ist. Der Schichtträger bildet die dem Betrachter zugewandte äußere Oberfläche und ist deshalb aus einem kratzfesten Werkstoff zu bilden. Das bei den Ausführungsbeispielen für den Schichtträger verwendete Natron-Silikatglas und die Klarglasscheibe sind nicht bruchsicher und können bei einem unfallbedingten Aufprall einer Person auf den Rückblickspiegel erhebliche Verletzungen verursachen. Der Rückblickspiegel ist aufwendig zu fertigen und weist ein verhältnismäßig hohes Gewicht auf. Eine Wiederverwendung des Materials des Rückblickspiegels nach Ablauf der Benutzungsdauer oder nach einer Beschädigung ist aufgrund der verwendeten Materialien nicht möglich.

Ein ähnlicher Rückblickspiegel, der ohne Zusatzschicht gebildet ist, jedoch im wesentlichen dieselben Nachteile aufweist, ist in der DE-C-3436 016 beschrieben.

In der DE-C-3503 957 wird zur Entspiegelung von Glas und durchsichtigen Kunststoffen ein Beschichtungsmittel aus einem Polysiloxanlack und einem Gemisch aus einer thermisch hergestellten Kieselsäure und einer hydrophobierten thermisch hergestellten Kieselsäure verwendet. Das Beschichtungsmittel soll lagerbeständige, haftfeste, abzieh- und chemikalienbeständige Entspiegelungsschichten liefern, die störende Reflexionen entscheidend vermindern, ohne die Durchsicht wesentlich zu beeinträchtigen. Ein wesentlicher Nachteil ist darin zu sehen, daß mit einer derartigen Entspiegelungsschicht die Lichttransmission durch das mit dem Beschichtungsmittel beschichtete Glas oder den beschichteten Kunststoff zumindest etwas herabgesetzt ist.

Der Erfindung liegt die Aufgabe zugrunde, einen Rückblickspiegel nach dem Oberbegriff des Patentanspruches 1 anzugeben, der einfacher und kostengünstiger zu fertigen ist und eine größere Vielfalt in der Wahl der Werkstoffe und Anordnung der Schichten, insbesondere die Verwendung eines bruchsicheren Kunststoffes für die Spiegelplatte ermöglicht. Darüber hinaus soll der Rückblickspiegel eine Verwendung in der Verarbeitung weitgehend ungiftiger Werkstoffe ermöglichen, die nach Ablauf der Gebrauchszeit des Rückblickspiegel eine Wiederverwendung der verwendeten Werkstoffe ermöglicht.

Diese Aufgabe ist durch die im Kennzeichen des Patentanspruches 1 angegebenen Merkmale gelöst. Besonders vorteilhaft ist, daß der Rückblickspiegel eine gegenüber den bekannten Ausführungen größere Vielfalt in der Verwendung von Materialien und Anordnung der Schichten ermöglicht. Während die Schutzschicht in jedem Fall zumindest auf der dem Spiegelbetrachter zugewandten Vorderseite der Spiegelplatte angeordnet ist und vorzugsweise die dem Spiegelbetrachter zugewandte äußerste Spiegeloberfläche bildet, können die Absorptionsschicht und die Reflexionsschicht einzeln oder gemeinsam auf der dem Spiegelbetrachter abgewandten Rückseite oder an der Vorderseite jeweils der Spiegelplatte angeordnet sein, wenn die Absorptionsschicht näher an dem Spiegelbetrachter als die Reflexionsschicht angeordnet ist. Ist die Reflexionsschicht auf der dem Spiegelbetrachter abgewandten Rückseite der Spiegelplatte angeordnet, ist die Spiegelplatte aus einem transparenten Werkstoff zu fertigen. Es können auch zwei oder mehr Schichten, einschließlich der Spiegelplatte, durch eine gemeinsame Schicht gebildet sein, die wie die entsprechende Einzelschicht wirkt. Gefordert ist lediglich, daß der mittlere Lichtreflexionsgrad des Rückblickspiegels ohne die Schutzschicht im Spektralbereich des sichtbaren Lichts von etwa 550 nm bis 700 nm bei etwa 40 % oder darunter liegt. Dies läßt sich ohne weiteres beispielsweise mit einer Spiegelplatte aus Kunststoff, beispielsweise Polycarbonat, einer Reflexionsschicht aus Al und einer Absorptionsschicht aus TiO₂, CrO₂, Cr oder einer anderen Schicht, beispielsweise auf Polysiloxan-Basis, erreichen, die eingefärbt sein kann. Aufwendig zu fertigende Interferenzschichten oder die Verwendung in der Verarbeitung giftiger, flüssiger Elektrolyten sind nicht erforderlich. Die Schichtdicken sind auch gegenüber Interferenzschichten weniger genau einzuhalten.

Der nach einer Richtlinie der Europäischen Gemeinschaft bei einem Rückblickspiegel eines Kraftfahrzeugs einzuhaltende Mindestreflexionsgrad von 0,4 ist durch Aufbringen der Schutzschicht im wesentlichen aus Polysiloxan eingehalten, da diese Schutzschicht den Reflexionsgrad des Verbundes aus der Spiegelplatte, der Reflexionsschicht und der Absorptionsschicht um etwa 20 % erhöht. Darüber hinaus ergibt sich mit dieser Schutzschicht auf Polysiloxan-Basis in dem langwelligen sichtbaren Spektralbereich ein Kurvenverlauf des mittleren Reflexionsgrades in Abhängigkeit von der Wellenlänge, die in dem Bereich von etwa 550 nm bis 700 nm in vorteilhafter Weise deutlich flacher als ohne Schutzschicht auf Polysiloxan-Basis verläuft. Der mit der Schutzschicht auf Polysiloxan-Basis versehene Rückblickspiegel kann einen Schwingungen bildenden Verlauf des gesamten Lichtreflexionsgrades des Rückblickspiegels aufweisen. Unter dem Verlauf des mittleren Lichtreflexionsgrades ist eine diese Schwingungen ausgleichende Glättungskurve zu verstehen, die für die jeweilige Wellenlänge den über einen kleinen Wellenlängenbereich gemessenen und gemittelten Lichtreflexionsgrad repräsentiert.

In einer besonders bevorzugten Ausgestaltung der Erfindung ist die Spiegelplatte elektrisch leitend oder halbleitend ausgebildet und sind an der Spiegelplatte Elektroanschlüsse vorgesehen, die eine konduktive Erwärmung (Widerstandsheizung) der Spiegelplatte ermöglichen.

Falls die Absorptionsschicht durch eine elektrochrome Schicht gebildet ist, die durch Anlegen einer elektrischen Spannung ihr Transmissions- oder Absorptionsvermögen ändert, so kann die Stromversorgung über die Spiegelplatte und/oder die Reflexionsschicht erfolgen, wenn die Spiegelplatte und/oder die Reflexionsschicht elektrisch leitend oder halbleitend ausgebildet ist bzw. sind.

Der Rückblickspiegel eignet sich sowohl als Innenrückblickspiegel wie auch als Außenrückblickspiegel eines Kraftfahrzeugs, wobei insbesondere bei Nachtfahrt keine Blendwirkung durch die Scheinwerfer nachfolgender Fahrzeuge erfolgt, wodurch sich die Fahrsicherheit erhöht.

Vorteilhafte Ausgestaltungen der Erfindung sind Gegenstand von Unteransprüchen.

Fünf Ausführungsbeispiele der Erfindung werden anhand einer Zeichnung näher erläutert. Es zeigen
- Fig. 1: einen Vertikalschnitt eines Rückblickspiegels, mit jeweils vor der Spiegelplatte angeordneter Reflexionsschicht und Absorptionsschicht,
- Fig. 2: eine Fig. 1 entsprechende Ansicht mit anderer Absorptionsschicht,
- Fig. 3: eine Fig. 1 entsprechende Ansicht, mit jeweils hinter der Spiegelplatte angeordneter Reflexionsschicht und Absorptionsschicht,
- Fig. 4: eine Fig. 1 entsprechende Ansicht mit hinter der Spiegelplatte angeordneter Reflexionsschicht und vor der Spiegelplatte angeordneter Absorptionsschicht,
- Fig. 5: eine Fig. 1 entsprechende Ansicht mit einer konduktiv aufheizbaren Spiegelplatte,
- Fig. 6: einen möglichen Verlauf des Lichtreflexionsgrades des Verbundes der Spiegelplatte mit der Reflexions- und Absorptionsschicht und
- Fig. 7: einen möglichen Verlauf des Lichtreflexionsgrades eines Fig. 6 entsprechenden Verbundes, mit einer zusätzlichen Schutzschicht auf Polysiloxan-Basis.

Der gemäß einem ersten Ausführungsbeispiel in einem Vertikalschnitt dargestellte Rückblickspiegel 1 ist ein im Innenraum eines Kraftfahrzeugs etwa in Seitenmitte oberhalb der vorderen Windschutzscheibe angeordneter Innenrückblickspiegel, der ohne einen den Rückblickspiegel 1 aufnehmenden Spiegelhalter dargestellt ist. Bei dieser Ausführung ist der Rückblickspiegel 1 im wesentlichen durch eine Spiegelplatte 2, eine Reflexionsschicht 3, eine Absorptionsschicht 4 und eine den Verbund dieser Schichten allseits umgebende Schutzschicht 5 auf Polysiloxan-Basis gebildet. Dabei ist auf der dem Spiegelbetrachter 6 zugewandten Vorderseite der Spiegelplatte 2 zunächst die Reflexionsschicht 3 und anschließend die Absorptionsschicht 4 aufgebracht. Die Spiegelplatte 2 kann an sich ein beliebiger Werkstoff sein, der wenigstens eine polierfähige Oberfläche mit einer ausreichenden Haltbarkeit für die Reflexionsschicht 3 aufweist. Dabei ist zunächst die Reflexionsschicht 3 und anschließend die Absorptionsschicht 4 auf die Vorderseite der Spiegelplatte 2 aufzubringen. Es ist in diesem Fall nicht erforderlich, daß die Spiegelplatte 2 transparent ausgebildet ist. Die Reflexionsschicht 3 besteht bei dem Ausführungsbeispiel aus Al und hat einen Transmissionsgrad von etwa 1 %. Die Absorptionsschicht 4 weist bei dem Ausführungsbeispiel eine Dicke ≧ 70 nm auf und ist durch einen in beliebiger Farbe eingefärbten Polysiloxanlack gebildet.

Sie könnte aber auch durch einen anderen Werkstoff oder eine beispielsweise eingefärbte transparente Folie gebildet sein. Nach dem Aufbringen der Absorptionsschicht 4 beträgt der von dem Spiegelbetrachter 6 aus gemessene Lichtreflexionsgrad etwa 4 bis 20 %. Auf diesen Verbund aus der Spiegelplatte 2, der Reflexionsschicht 3 und der Absorptionsschicht 4 wird anschließend beispielsweise durch Aufdampfen, Sputtern, Lackieren, Tauchlackieren oder Aufwalzen einer Folie allseits eine Schutzschicht 5 auf Polysiloxan-Basis aufgebracht. Durch diese Schutzschicht 5, die bei dem Ausführungsbeispiel einen Lichtbrechungsindex von n = 1,4 aufweist, wird der von vorne gemessene Lichtreflexionsgrad des gesamten Rückblickspiegels 1 im Mittel um etwa 20 % insbesondere in dem langwelligen sichtbaren Spektralbereich des sichtbaren Lichts von etwa 550 bis 700 nm erhöht. Dadurch ist der nach einer Richtlinie der Europäischen Gemeinschaft bei einem Rückblickspiegel einzuhaltende Mindestreflexionsgrad von 40 % mit ausreichendem Abstand davon eingehalten und ein flacherer Verlauf des gemittelten Lichtreflexionsgrades zwischen etwa 550 und 700 nm erreicht, der eine Glättungskurve des möglicherweise Schwingungsausschläge aufweisenden gemessenen Lichtreflexionsgrades darstellt. Der so gefertigte Rückblickspiegel 1 ermöglicht am Tag eine ausreichende klare Sicht nach rückwärts und vermeidet bei Nachfahrt eine Blendwirkung durch die Scheinwerfer nachfolgender Fahrzeuge. Ist die Spiegelplatte 2 aus einem leichten Werkstoff, beispielsweise aus Kunststoff, z. B. Polycarbonat, gefertigt, so weist der Rückblickspiegel ein geringes Gewicht auf. Er ist aber auch beispielsweise in diesem Fall bruchsicher und kostengünstig zu fertigen.

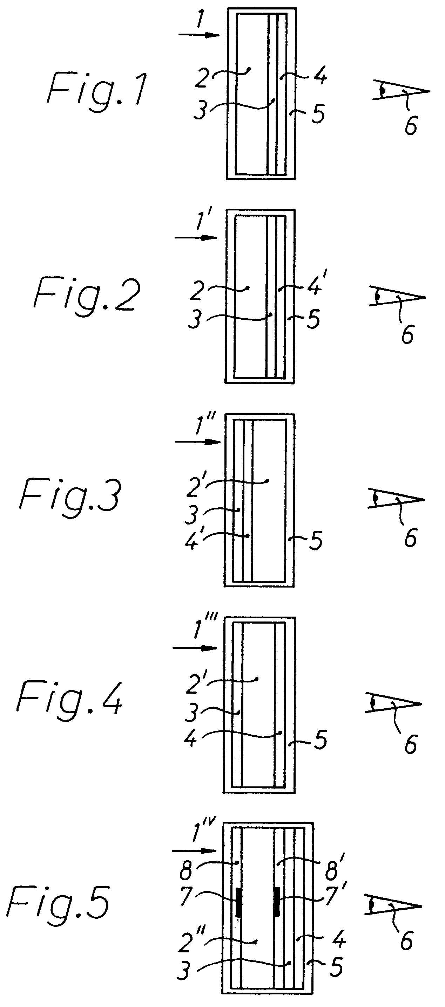

Das in Fig. 2 dargestellte zweite Ausführungsbeispiel ist ähnlich wie das Ausführungsbeispiel nach Fig. 1 gebildet. Zur Vermeidung von Wiederholungen sind gleiche Schichten mit gleichen Bezugszahlen und vergleichbare Schichten mit gleichen Bezugszahlen und einem hochgestellten Zeichen versehen. Bei diesem Rückblickspiegel 1' ist die Absorptionsschicht 4' eine Oxydschicht, beispielsweise TiO₂, CrO₂, oder ein lichtabsorbierendes Metall, beispielsweise Cr. Der Lichtreflexionsgrad des Rückblickspiegels 1' ohne die Schutzschicht 5 beträgt etwa 4 bis 40 %. Durch nachfolgendes Aufbringen der Schutzschicht 5 auf diesen Verbund wird der Lichtreflexionsgrad um etwa 20 % erhöht.

Bei dem in Fig. 3 dargestellten dritten Ausführungsbeispiel besteht die Spiegelschicht 2' aus einem transparenten Material, vorzugsweise aus einem transparenten Kunststoff. Die Reflexionsschicht 3, die Absorptionsschicht 4' und die Schutzschicht 5 entsprechen den bei der Ausführung gemäß Fig. 2 verwendeten Materialien. Bei der vorliegenden Ausführung ist auf die dem Spiegelbetrachter 6 abgewandte Rückseite der Spiegelplatte 2' zunächst die Absorptionsschicht 4' und dahinter die Reflexionsschicht 3 angeordnet. Die Lichtreflexionsgrade des Rückblickspiegels 1'' jeweils ohne und mit der Schutzschicht 5 auf Polysiloxan-Basis entsprechen etwa den für das Ausführungsbeispiel nach Fig. 2 angegebenen Werten.

Wie dem vierten Ausführungsbeispiel nach Fig. 4 zu entnehmen ist, kann die Reflexionsschicht 3 an der Rückseite der Spiegelplatte 2' und die Absorptionsschicht 4 an der Vorderseite der Spiegelplatte 2' angeordnet und wie bei den vorhergehenden Ausführungen der so gebildete Verbund beispielsweise allseitig von einer Schutzschicht 5 auf Polysiloxan-Basis umgeben sein. Die Lichtreflexionsgrade des so gebildeten Rückblickspiegels 1''' jeweils ohne und mit der Schutzschicht 5 entsprechen etwa den für das Ausführungsbeispiel nach Fig. 2 angegebenen Werten.

Ein Fig. 5 entsprechendes fünftes Ausführungsbeispiel weist einen der Ausführung nach Fig. 1 entsprechenden Aufbau auf. Bei dieser Ausführung ist der Rückblickspiegel 1^{IV} ein Außenrückblickspiegel, der nicht im Fahrgastraum eines Kraftfahrzeugs, sondern an der Außenseite einer vorderen Kraftfahrzeugtür befestigt ist. Die Spiegelplatte 2'' ist elektrisch leitend oder halbleitend ausgebildet und beispielsweise an ihrer Vorderseite und Rückseite mit jeweils einem Elektroanschluß 7, 7' versehen. Die mit einer nicht dargestellten Gleich- oder Wechselspannungsquelle verbindbaren Elektroanschlüsse 7, 7' erwärmen nach der Betätigung eines Schalters in einer elektrischen Verbindungsleitung die Spiegelplatte 2'' konduktiv. Durch diese Widerstandsheizung wird die gesamte Spiegelplatte 2'' und schon nach kurzer Zeit die äußere Schutzschicht 5 erwärmt. Zur Isolierung der Elektroanschlüsse 7, 7' ist jeweils eine die Elektroanschlüsse 7, 7' nach außen isolierende Isolierschicht 8, 8' vorgesehen, die bei dem Ausführungsbeispiel einerseits zwischen der Schutzschicht 5 und der Spiegelplatte 2'' und andererseits zwischen der Spiegelplatte 2'' und der Reflexionsschicht 3 angeordnet sind. Im Lichtreflexionsvermögen ohne und mit der Schutzschicht 5 entspricht der Rückblickspiegel 1^{IV} dem Rückblickspiegel nach Fig. 1.

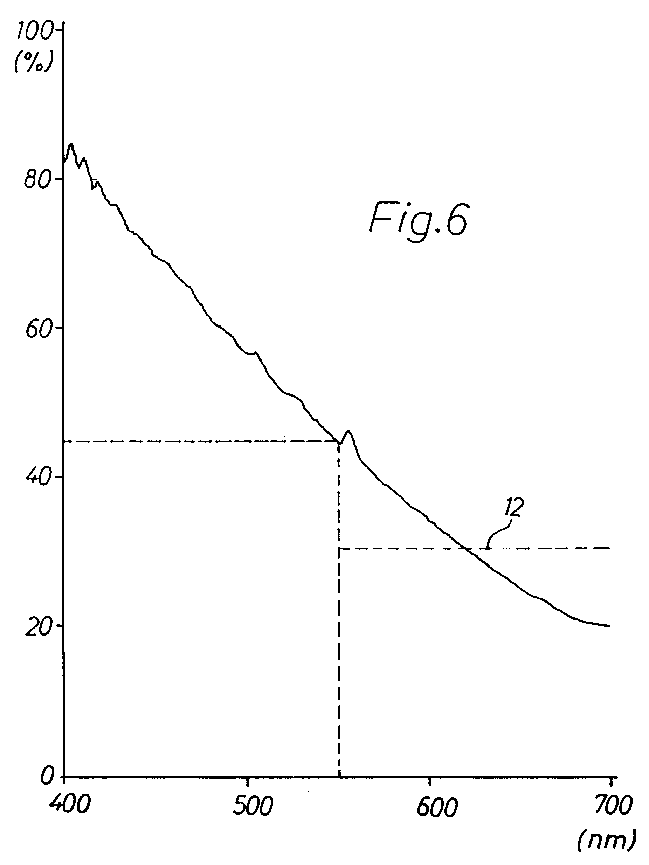

Ein bei den Ausführungsbeispielen möglicher Verlauf des Lichtreflexionsgrades des Rückblickspiegels ohne seine Schutzschicht auf Polysiloxan-Basis ist in Fig. 6 in dem Spektralbereich des sichtbaren Lichtes von 400 bis 700 nm dargestellt. Der Lichtreflexionsgrad bei einer Wellenlänge von etwa 550 nm beträgt ca. 45 % und liegt damit etwas über dem nach einer Richtlinie der Europäischen Gemeinschaft geforderten Mindestreflexionswert von 40 %.

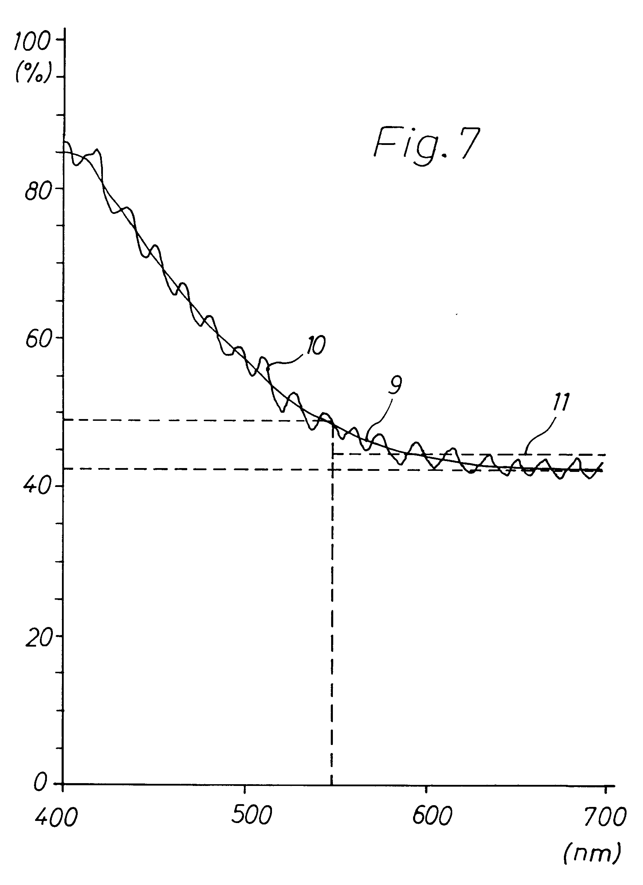

Nach dem Aufbringen einer Schutzschicht auf Polysiloxan-Basis auf den Rückblickspiegel gemäß Fig. 6 ergibt sich beispielsweise der in Fig. 7 dargestellte Verlauf des Lichtreflexionsgrades in Abhängigkeit von der Wellenlänge in dem Spektralbereich von 400 bis 700 nm. Wie man erkennt, hat sich der Lichtreflexionsgrad bei etwa 550 nm um ca. 5 % und der für den gemessenen Verlauf 10 eine mittelnde theoretische Glättungskurve 9 darstellende Lichtreflexionsgrad im Bereich von 550 bis 700 nm mit zunehmender Wellenlänge einem Lichtreflexionsgrad von etwa 40 % angenähert. Bildet man in dem Spektralbereich von 550 bis 700 nm für den Kurvenverlauf nach Fig. 6 und für den Glättungsverlauf 9 oder den gemessenen Verlauf 10 in Fig. 7 jeweils einen mittleren Reflexionsgrad 11, so haben sich die dem Glättungsverlauf 9 bzw. dem Verlauf 10 entsprechenden Mittelwerte etwa um 20 % gegenüber dem Fig. 6 entsprechenden Mittelwert 12 erhöht. Der Schwingungserscheinungen aufweisende gemessene Lichtreflexionsgrad gemäß dem Verlauf 10 in Fig. 7 verursacht keine Farbsäume im Spiegelbild bei Tageslicht oder Licht von Lampen mit Heizdrähten. Die bei dem Verlauf 10 aufgetretenen Schwingungserscheinungen im Verlauf des Lichtreflexionsgrades können durch eine andere Wahl der verwendbaren Werkstoffe und Schichtdicken vermindert werden.

Die Erfindung wurde anhand von fünf Ausführungsbeispielen erläutert, auf die der Erfindungsgegenstand nicht eingeschränkt ist. Es sind vielmehr auch zahlreiche Abänderungen möglich, ohne den Erfindungsgedanken aufzugeben. Die Spiegelplatte kann beispielsweise eben, gekrümmt oder bogenförmig verlaufen und vorzugsweise aus Kunststoff oder aus Metall bzw. einer Metallegierung, beispielsweise auf Nitrid- oder Carbidbasis gebildet sein. Die Reflexionsschicht ist vorzugsweise aus Al gefertigt. Sie kann aber auch aus einem anderen lichtreflektierenden Werkstoff gebildet sein. Für die reflexmindernde Schicht ist auch eine Absorptionsschicht zu verwenden, die aus einem Werkstoff mit natürlicher Absorptionswirkung besteht. Die reflexmindernde Schicht kann auch eine unter elektrischer Spannung ihr Transmissions- oder Absorptionsvermögen verändernde elektrochrome Schicht sein. Ist in dem letztgenannten Fall die Spiegelplatte und - falls die Stromversorgung sonst unterbrochen wäre - ggf. die Reflexionsschicht elektrisch leitend oder halbleitend ausgebildet, so kann die Stromzufuhr zu der elektrochromen Schicht über die Spiegelplatte und erforderlichenfalls über die Reflexionsschicht erfolgen. Ebenso ist es möglich, daß die Reflexionsschicht von einem transparenten Kratzfestschicht-System mit einer Primerschicht und einer organischen oder anorganischen Kratzfestschicht geschützt ist. Dabei kann die Kratzfestschicht beispielsweise eingefärbt sein und die Absorptionsschicht bilden. Außerdem ist vorgesehen, daß zwei oder mehr Schichten des Rückblickspiegels, einschließlich der Spiegelplatte, durch eine gemeinsame Schicht gebildet sind, die wie die betreffenden Einzelschichten wirkt. Ist beispielsweise die Reflexionsschicht auf der dem Spiegelbetrachter abgewandten Rückseite der Spiegelplatte angeordnet, so kann die in diesem Fall transparent auszubildende Spiegelplatte die Absorptionsschicht bilden. Eine bei dem Ausführungsbeispiel nach Fig. 5 vorgesehene Heizung der Spiegelplatte könnte auch bei einer anderen Anordnung der Schichten, beispielsweise Fig. 1 bis 4 entsprechend, vorgesehen sein. Allen Ausführungen ist gemeinsam, daß der mittlere Lichtreflexionsgrad des Rückblickspiegels im Spektralbereich des sichtbaren langwelligen Lichts von 550 bis 700 nm ohne die Schutzschicht auf Polysiloxan-Basis bei etwa 40 % oder darunter liegt und durch zusätzliches Aufbringen der Schutzschicht auf Polysiloxan-Basis der mittlere gesamte Lichtreflexionsgrad des Rückblickspiegels zumindest in diesem Spektralbereich auf etwa 40 bis 60 % angehoben ist.

## Patentansprüche

1. Rückblickspiegel (1) für Kraftfahrzeuge, mit einer Spiegelplatte (2), auf die eine Reflexionsschicht (3), eine reflexionsmindernde Schicht (4) und eine Schutzschicht aufgebracht (5) sind, dadurch gekennzeichnet, daß die Schutzschicht (5) auf der dem Spiegelbetrachter (6) zugewandten Vorderseite der Spiegelplatte (2, 2', 2'') angeordnet ist und im wesentlichen aus Polysiloxan besteht, und im Spektralbereich des sichtbaren Lichts von etwa 550 nm bis 700 nm der mittlere Lichtreflexionsgrad des Verbundes der Spiegelplatte mit der Reflexionsschicht und der reflexionsmindernden Schicht bei 40 % oder darunter liegt und die Schutzschicht (5) in diesem Spektralbereich einen mittleren gesamten Lichtreflexionsgrad des Verbundes und der Schutzschicht (5) innerhalb von 40 bis 60 % bewirkt.

2. Rückblickspiegel nach Anspruch 1, dadurch gekennzeichnet, daß die reflexionsmindernde Schicht eine Absorptionsschicht (4, 4') oder eine unter elektrischer Spannung ihr Transmissions- oder Absorptionsvermögen verändernde elektrochrome Schicht ist.

3. Rückblickspiegel nach Anspruch 2, dadurch gekennzeichnet, daß die Absorptionsschicht (4, 4') eine Oxydschicht, insbesondere TiO₂, CrO₂, ein lichtabsorbierendes Metall, insbesondere Ni, NiCr oder Cr, eine eingefärbte Folie oder eine eingefärbte Polysiloxanlackschicht ist.

4. Rückblickspiegel nach einem der Ansprüche 1 bis 3, dadurch gekennzeichnet, daß die Absorptionsschicht (4, 4') eine Dicke ≧ 70 nm aufweist und zusammen mit der Reflexionsschicht (3) im Spektralbereich des sichtbaren Lichts von 550 nm bis 700 nm einen Lichtreflexionsgrad von etwa 4 bis 40 % bewirkt.

5. Rückblickspiegel nach einem der Ansprüche 1 bis 4, dadurch gekennzeichnet, daß die Spiegelplatte elektrisch leitend oder halbleitend ist.

6. Rückblickspiegel nach einem der Ansprüche 1 bis 5, dadurch gekennzeichnet, daß die Spiegelplatte (2, 2', 2'') aus Metall oder einer Metallegierung auf Nitrid- oder Carbidbasis oder aus Kunststoff besteht.

7. Rückblickspiegel nach Anspruch 5 oder 6, dadurch gekennzeichnet, daß an der Spiegelplatte (2'') zwei mit einer Gleich- oder Wechselspannungsquelle verbundene Elektroanschlüsse (7, 7') mit Abstand voneinander befestigt sind, die eine konduktive Erwärmung der Spiegelplatte (2'') ermöglichen und zwischen der Spiegelplatte (2'') bzw. den Elektroanschlüssen (7, 7') und der jeweils daran angrenzenden Schicht (Reflexionsschicht 3, Schutzschicht 5) eine Isolierschicht (8, 8') vorgesehen ist.

8. Rückblickspiegel nach einem der Ansprüche 1 bis 7, dadurch gekennzeichnet, daß die Reflexionsschicht (3) ein lichtreflektierendes Metall, vorzugsweise Al, ist.

9. Rückblickspiegel nach einem der Ansprüche 1 bis 8, dadurch gekennzeichnet, daß die Reflexionsschicht von einem transparenten Kratzfestschicht-System mit einer Primerschicht und einer durch ein Vakuum- oder Plasmaverfahren aufgebrachten anorganischen oder organischen Kratzfestschicht geschützt ist.

10. Rückblickspiegel nach Anspruch 9, dadurch gekennzeichnet, daß die Kratzfestschicht eingefärbt ist und die Absorptionsschicht bildet.

11. Rückblickspiegel nach einem der Ansprüche 1 bis 10, dadurch gekennzeichnet, daß bei auf der Rückseite der Spiegelplatte (2') angeordneter Reflexionsschicht (3) die Spiegelplatte (2') transparent ist.

12. Rückblickspiegel nach einem der Ansprüche 1 bis 11, dadurch gekennzeichnet, daß zwei oder mehr Schichten des Rückblickspiegels, einschließlich der Spiegelplatte, durch eine gemeinsame Schicht gebildet sind.

## Claims

1. A rear-view mirror (1) for motor vehicles, comprising a mirror plate (2) bearing a reflecting layer (3), a reflection-reducing layer (4) and a protective layer (5), characterised in that the protective layer (5) is disposed on the front of the mirror plate (2, 2', 2'') facing the observer (6) and substantially consists of polysiloxane, and in the spectral region of visible light from about 550 nm to 700 nm the average reflection factor of the composite mirror plate comprising the reflecting layer and the reflecting-reducing layer is about 40° or below and, as a result of the protective layer (5), the average total reflection factor of the composite material and the protective layer (5) in the aforementioned spectral region is in the range from 40 to 60°.

2. A rear-view mirror according to claim 1, characterised in that the reflection-reducing layer is an absorption layer (4, 4') or an electrochromic layer, the transmission or absorption of which varies with the electric voltage.

3. A rear-view mirror according to claim 2, characterised in that the absorption layer (4, 4') is an oxide layer, more particularly TiO₂ or CrO₂, or a light-absorbing metal, more particularly Ni, NiCr or Cr, or a tinted foil or a tinted polysiloxane lacquer layer.

4. A rear-view mirror according to any one of claims 1 to 3, characterised in that the absorption layer (4, 4') has a thickness ≧ 70 nm and together with the reflection layer (3) results in a reflection factor of about 4 to 40% in the visible-light spectrum region from 550 nm to 700 nm.

5. A rear-view mirror according to any of claims 1 to 4, characterised in that the mirror plate is electrically conductive or semiconductive.

6. A rear-view mirror according to any of claims 1 to 5, characterised in that the mirror plate (2, 2', 2'') is made of metal or a nitride or carbide-based metal alloy or of plastics.

7. A rear-view mirror according to claim 5 or 6, characterised in that two spaced-apart electric connections (7, 7') connected to a DC or AC voltage source are secured to the mirror plate (2'') to permit conductive heating of the mirror plate (2''), and an insulating layer (8, 8') is provided between the mirror plate (2'') or the electric connections (7, 7') and the respective adjacent layer (the reflection layer 3 or the protective layer 5).

8. A rear-view mirror according to any one of claims 1 to 7, characterised in that the reflecting layer (3) is a light-reflecting metal, preferably Al.

9. A rear-view mirror according to any one of claims 1 to 8, characterised in that the reflecting layer is protected by a transparent scratch-resistant layer system comprising a primary layer and an inorganic or organic scratch-resistant layer applied by a vacuum or plasma process.

10. A rear-view mirror according to claim 9, characterised in that the scratch-resistant layer is tinted and constitutes the absorption layer.

11. A rear-view mirror according to any one of claims 1 to 10, characterised in that, when the reflection layer (3) is disposed on the back of the mirror plate (2'), the mirror plate (2') is transparent.

12. A rear-view mirror according to any one of claims 1 to 11, characterised in that two or more layers of the rear-view mirror, including the mirror plate, are formed by a common layer.

## Revendications

1. Rétroviseur (1) pour véhicules automobiles, avec une plaque de miroir (2) sur laquelle sont appliquées une couche de réflexion (3), une couche réduisant la réflexion (4) et une couche de protection (5), caractérisé en ce que la couche de protection (5) est placée sur la face antérieure de la plaque de miroir (2, 2', 2'') tournée vers l'observateur (6) et se compose essentiellement de polysiloxane et le taux de réflexion moyen de la lumière de la combinaison de rétroviseur avec la couche de réflexion et la couche réduisant la réflexion dans le domaine spectral de la lumière visible d'environ 550 nm à 700 nm se situe à 40 % ou en dessous et la couche de protection (5) dans ce domaine spectral occasionne un taux de réflexion total moyen de la lumière de la combinaison et de la couche de protection (5) entre 50 et 60 %.

2. Rétroviseur selon la revendication 1, caractérisé en ce que la couche réduisant la réflexion est une couche d'absorption (4, 4') ou une couche d'électrochrome sous tension électrique modifiant son pouvoir de transmission ou d'absorption.

3. Rétroviseur selon la revendication 2, caractérisé en ce que la couche d'absorption (4, 4') est une couche d'oxyde, en particulier TiO₂, CrO₂, un métal absorbant la lumière, en particulier Ni, NiCr ou Cr, un film coloré ou une couche de vernis de polysiloxane teinté.

4. Rétroviseur selon l'une des revendications 1 à 3, caractérisé en ce que la couche d'absorption a une épaisseur ≧ 70 nm et ensemble avec la couche de réflexion (3) provoque dans le domaine spectral de la lumière visible de 550 nm à 700 nm un taux de réflexion de la lumière d'environ 4 à 40 %.

5. Rétroviseur selon l'une des revendications 1 à 4, caractérisé en ce que la plaque de miroir est conducteur ou semi-conducteur électrique.

6. Rétroviseur selon l'une des revendications 1 à 5, caractérisé en ce que la plaque de miroir (2, 2', 2'') est composée de métal ou d'un alliage métallique à base de nitrure ou de carbure ou d'une matière plastique.

7. Rétroviseur selon les revendications 5 ou 6, caractérisé en ce que sur la plaque de miroir (2'') sont fixés à une certaine distance l'un de l'autre deux raccordements électriques (7, 7') reliés à une source de tension continue ou alternative, raccordements qui permettent un chauffage par conduction de la plaque de miroir (2'') et entre la plaque de miroir (2'') ou les bornes électriques (7, 7') et la couche respectivement limitrophe de celles-ci (couche de réflexion 3, couche de protection 5) est prévue une couche isolante (8, 8').

8. Rétroviseur selon l'une des revendications 1 à 7, caractérisé en ce que la couche de réflexion (3) est un métal réfléchissant la lumière, de préférence Al.

9. Rétroviseur selon l'une des revendications 1 à 8, caractérisé en ce que la couche de réflexion est protégée par un système de couches transparent résistant à l'abrasion avec une couche primaire et une couche résistant à l'abrasion minérale ou organique appliquée par un procédé sous vide ou au plasma.

10. Rétroviseur selon la revendication 9, caractérisé en ce que la couche résistant à l'abrasion est teintée et forme la couche d'absorption

11. Rétroviseur selon l'une des revendications 1 à 10, caractérisé en ce que la plaque de miroir (2') est transparente avec la couche de réflexion (3) disposée sur la face arrière de la plaque de miroir (2').

12. Rétroviseur selon l'une des revendications 1 à 11, caractérisé en ce que deux ou plusieurs couches du rétroviseur, y compris la plaque de miroir, sont formées par une couche commune.
